# EUROPÄISCHE PATENTANMELDUNG

(11) **EP 2 216 371 A1**
(43) Veröffentlichungstag der Anmeldung: **11.08.2010**
(21) Anmeldenummer: 09001740.1
(22) Anmeldetag: 07.02.2009
(51) Int. Cl.: C09D 1/04, C09D 5/00, C09D 5/18, C09C 1/30, C01B 33/32

(54) **Lösemittelfreie wasserlösliche Silan modifizierte Silikate**

(71) Anmelder: Cognis IP Management GmbH, 40589 Düsseldorf (DE)
(72) Erfinder: Bohlander, Ralf, DE-40699 Erkrath (DE)

(57) **Zusammenfassung**

Beschrieben werden wäßrige Lösungen modifizierter Silikate, wobei diese Lösungen frei sind von organischen Lösungsmitteln, dadurch erhältlich, dass man
(a) eine wässerige Lösung von Silikaten, die der allgemeinen Formel M₂O • nSiO2 folgen vorlegt, wobei M für ein Kation aus der Gruppe Li⁺, Na⁺, K⁺, NY₄⁺ wobei Y ein H-Atom und/oder einen Alkyl- oder Alkenylrest mit 1 bis 22 C-Atomen bedeutet, mit
(b) mindestens einem Silan der allgemeinen Formel (i)

R-(CH₂)ₙSi-(X)₃ (i)

in der X jeweils unabhängig voneinander für einen Rest CH₃, OCH₃, OC₂H₅, OC₃H₇, OCOCH₃, H oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet,
bei Temperaturen von 5 bis 100 °C zur Reaktion bringt, und anschließend die bei der Umsetzung entstandenen Alkohole entfernt.

## Beschreibung

Die vorliegende Erfindung betrifft die Herstellung organisch und anorganisch modifizierter löslicher Silikate in wässriger Lösung. Diese Silikate handelt es sich um lösemittelfreie hybride anorganisch-organische Oligomere.

Basierend auf Silizium existieren eine Vielzahl an Produktlösungen, welche nach Anwendung als Beschichtung eine Substratoberfläche mit verbesserten Eigenschaften ergeben hinsichtlich Brandschutz, Kratzfestigkeit, Korrosionsfestigkeit etc.. Im Grundsatz möchte man möglichst dünne Schichten aus kostengünstigem Material ohne negative Begleiterscheinungen wie VOC (Verdunstung von Lösungsmitteln bei der Anwendung) oder AOX-Abwasserbelastung (organochlor-haltige Mittel) möglichst in Form einer Lösung (Vermeidung von Staub) und vorzugsweise eine wässrige Lösung einsetzen. Die Applikation sollte insbesondere auch mit gängigen einfachen Mitteln, wie Sprühen, Aufrollen, Rakeln etc. möglich sein, um teure Oberflächenmodifikationsverfahren wie z.B. Sputtern etc zu umgehen. Das flüssige Beschichtungsmittel sollte in seiner Formulierung an verschiedene Untergründe in seiner Zusammensetzung anpassbar sein.

Es wurde nun gefunden, dass bestimmte modifizierte lösliche Silikate die oben gestellten Anforderungen ausgezeichnet erfüllen.

Gegenstand der vorliegenden Anmeldung sind wäßrige Lösungen modifizierter Silikate, wobei diese Lösung frei sind von organischen Lösungsmitteln, dadurch erhältlich, dass man
(a) eine wässerige Lösung von Silikaten, die der allgemeinen Formel M₂O · nSiO₂ folgen vorlegt, wobei M für ein Kation aus der Gruppe Li⁺, Na⁺, K⁺, NY₄⁺ wobei Y ein H-Atome und/oder einen Alkyl- oder Alkenylreste mit 1 bis 10 C-Atomen bedeutet, mit
(b) mindestens einer Silizium-organischen Verbindung der allgemeinen Formel (I)

   R-(CH₂)ₙ-Si-(X)₃ (I)

   in der X jeweils unabhängig voneinander für einen Rest CH₃, OCH₃, OC₂H₅, OC₃H₇, OCOCH₃, H oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet, bei Temperaturen von 5 bis 100 °C zur Reaktion bringt und anschließend die bei der Umsetzung entstandenen Alkohole entfernt.

### Zur Komponente (a)

Als Komponente (a) kommen hier die insbesondere die sog. Wassergläser in Frage. Wassergläser sind aus dem Schmelzfluss erstarrte, glasige, wasserlösliche Alkalisilikate (also Salze von Kieselsäuren) oder deren viskose wässerige Lösungen. Beim Wasserglas kommen typischerweise 1-4 Mol SiO₂ auf 1 Mol Alkalioxid (M₂O), weshalb z.B. Natronwasserglas und Kaliwasserglas üblicherweise auch durch das Massenverhältnis oder Molverhältnis SiO₂/Alkalioxid sowie die Dichte der wässerigen Lösung charakterisiert werden. Sie enthalten oligomere Silikatanionen mit Alkali als Gegenion (mit z.B. M = K oder Na). Besonders bevorzugte Wassergläser als Reaktionskomponente (a) sind Natrium- oder Kaliumwassergläser. Dabei sind solche Wassergläser bevorzugt, deren molares Verhältnis von SiO₂ M₂O im Bereich von 2 bis 5 liegt und vorzugsweise im Bereich von 2,5 bis 3,5 liegt. Ganz besonders bevorzugt ist der Bereich von 2,7 bis 3,4. Die Wassergläser werden vorzugsweise als wässerige Lösung, die 15 bis 50 Gew.-% Feststoffe (gelöst) enthält verwendet, wobei Lösungen mit Gehalten von 25 bis 40 Gew.-% besonders bevorzugt sind.

### Zur Komponente (b)

Bei der Komponente (b) handelt es sich um ebenfalls bekannte Siliziumorganische Verbindungen. Zu diesen gehören vorzugsweise die Silane. Das ist zunächst eine Gruppenbezeichnung für Silizium-Wasserstoffverbindungen.
Im Rahmen der vorliegenden Erfindung werden die löslichen Silikate der Reaktionskomponente (a) allerdings nur mit solchen Silanen modifiziert, die der allgemeinen Formel (i) folgen:

R-(CH₂)n-Si-(X)3 (i)

in der X jeweils unabhängig voneinander für einen Rest CH₃, OCH₃, OC₂H₅, OC₃H₇, OCOCH₃ oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet. Bevorzugt sind hierbei insbesondere solche Silane, die der allgemeinen Formel (ii) folgen: R-(CH₂)ₙ-Si-(CH₃)(X)₂ wobei X und n die obigen Bedeutung haben.

Geeignete Silane sind z.B. Tris-(trimethoxy)silan, Octyltriethoxysilan, Methyltriethoxysilane, Methyltrimethoxysilane; Isocyanatesilan, wie Tris-[3- (trimethoxysilyl) propyl]isocyanurat; Gammamercaptopropyltrimethoxysilan, Bis-(3- [triethoxysilyl] propyl)polysulfid, Beta-(3,4-epoxycyclohexyl)-ethyltrimethoxysilan; Epoxysilane, Glycidoxy- und/oder Glycidoxypropyl trimethoxysilan, Gamma-glycidoxypropylmethyldiethoxysilan, (3-glycidoxy-propyl)-trimethoxysilan, (3-glycidoxypropyl)hexyltrimethoxysilan, Beta-(3,4-epoxycyclohexyl)-ethyltriethoxysilan; Silane die Vinylgruppen enthalten, wie Vinyltriethoxysilan, Vinyl trimethoxysilan, Vinyltris-(2- methoxyethoxy)silan, Vinylmethyldimethoxysilan, Vinyl triisopropoxysilan; Gamma-methacryloxypropyltrimethoxysilan, Gammamethacryloxypropyl triisopropoxysilan, Gamma-methacryloxypropyltriethoxysilan, Octyltrimethyloxysilan, Ethyltrimethoxysilan, Propyltriethoxysilan, Phenyltrimethoxysilan, 3-mercaptopropyltriethoxysilan, Cyclohexyltrimethoxysilan, Cyclohexyltriethoxysilan, Dimethyldimethyoxysilan, 3-Chloropropyltriethoxysilan, 3-methacryoxypropyltrimethoxy silan, i-Butyltriethoxysilan, Trimethylethoxysilan, Phenyldimethylethoxysilan, Hexamethyldisiloxan, Trimethylsilylchlorid, Vinyltriethoxysilan, Hexamethyldisilizan, und Mischungen daraus. In der US 4,927,749 werden in der Table 2, in den Spalten 9, Zeile 10 bis Spalte 11, Zeile 23 weitere geeignete Silane offenbart, die auch um Rahmen der vorliegenden technischen Lehre Verwendung finden können. Besonders bevorzugte Silane im Sinne der vorliegenden technischen Lehre sind ausgewählt aus der Gruppe der Alkylalkoxy-Silane, vorzugsweise der Trialkoxysilane, mit Methyl,- Ethyl, Propyl- und/oder Butylresten. Weiterhin als bevorzugt zu nennen sind solche Trialkoxysilane, deren Alkylkette durch Heteroatome, wie O oder N unterbrochen werden. Bevorzugte Silane sind N-(2-aminoethyl)-3-aminopropylsilan oder 3-Aminopropyltriethoxysilan bzw. das 3-Glycidyloxypropyltrimethoxy- oder 3-Glycidyl-oxypropyltriethoxisilan. Die Siliziumorganischen Verbindungen können jeweils alleine oder als Mischung eingesetzt werden, bzw. auch deren Partialhydrolysate unter evtl. vorab Reduktion des dabei freigesetzten Alkohols.

### Zur Komponente (c)

In einer Ausführungsform erfolgt die oben beschriebene Umsetzung der Komponenten (a) und (b) in Gegenwart einer weiteren (zusätzlichen) Komponente (c), welche zur anorganischen Modifikation der Oligomeren dient, werden wasserlösliche Salze saurer Oxide (Glasnetzwerkbildner) eingesetzt.

Die Verbindungen (c) lassen sich durch die allgemeine Summenformel (Kat)ₓ(An)_{y}O_{z}. charakterisieren, wobei "Kat" einwertige Kationen, "An" ein glasbildendes Element, (An)_{y}O_{z} zwei- oder mehrwertige Anionen bedeuten; die Indizes x, y und z ergeben sich aus dem notwendigen Ladungsausgleich der in Summe neutralen Komponenten (c), wobei die Indices ganzzahlig, aber auch nicht ganzzahlig sein können.
Ammonium, Natrium und Kalium sind als einwertige Kationen bevorzugt in Kombination mit Anionen aus der Gruppe der Borate, Phosphate, Aluminate, Molybdate, Wolframate, Ferrate, Germanate, Titanate, Stannate oder deren Oxo-polyanionen, welche auch untereinander gemischt sein können.
Besonders bevorzugt sind Natrium und Kalium als Kation sowie Borate und Polyphosphate als Anionen.
Komponente (c) wird vorzugsweise in fester Form eingesetzt.

### Zur Reaktionsführung

Vorzugsweise wird der lösliche Silikatanteil (a) als handelsübliche Schmelzglas-basierte Wasserglaslösung eingesetzt. Sofern die optionale Komponente (c) zum Einsatz kommt, wird diese in Wasser gelöst und zwar separat von Komponente (a). Lösung (a) wird dann mit Lösung (c) durch Umrühren klar gemischt. Alternativ kann nach Mischen fester Kieselsäurequellen mit Oxiden (AnᵥO_{w}) oder Oxisilikaten (An_{d}SiₑO_{f}) und deren hydrothermalen Verlösung in Alkalilauge, bei Temperaturen im Bereich von 40-250 °C und insbesondre 120-200 °C auch eine anorganisch - (c) in (a) - modifizierte Wasserglaslösung hergestellt werden. In die anorganische - (c) in (a) - Lösung wird dann die flüssige Silan-Komponente (b) durch Eintropfen eindosiert.

Die modifizierten Silikatoligomere, die Gegenstand der vorliegenden Erfindung sind, werden vorzugsweise bei Raumtemperatur (20°C) hergestellt, gewünschtenfalls bei erhöhten Temperaturen bis 80°C, wobei der Temperaturbereich von 20 bis 50°C zur Umsetzung zum organisch-anorganischen Hybriden besonders bevorzugt ist. Die Auswahl der geeigneten Reaktionstemperatur ist abhängig von der Reaktivität der Silan-Komponente. Methoxy-Silane werden bevorzugt bei Raumtemperatur umgesetzt, Ethoxylsilane bevorzugt bei 40-50°C. Zum anderen sollte die Temperatur bei der Reaktion nicht zu hoch gewählt werden wegen der doch merklichen Flüchtigkeit der meisten Silan-Reaktanden. Nach vollständiger Mischung aller Komponenten wird weiter gerührt, bis eine transparente wässrige Lösung entsteht.
Erst dann wird weiter erhitzt auf 60-100°C, vorzugsweise 70-80° C um die bei der chemischen Umsetzung entstandenen Alkohole alleine oder zusammen mit Wasser abzudampfen; die Verdampfung (Abdestillation) kann dabei durch Reduktion des Druckes (Anlegen von Vakuum) begünstigt werden.
Wie bereits ausgeführt, ist die Entfernung der bei der Umsetzung entstandenen Alkohole ein essentielles Merkmal der vorliegenden Erfindung. Die Entfernung des Alkohols kann nach an sich beliebigen Methoden erfolgen, bevorzugt ist eine destillative Abtrennung, die bei Normaldruck oder reduziertem Druck erfolgen kann. Im Zuge einer destillativen Abtrennung ist es so, dass bei der Entfernung des Alkohols quasi zwangsweise Wasser mit abdestilliert wird. Das kann es erforderlich machen, nach diesem Destillationsschritt gegebenenfalls wieder Wasser zuzudosieren, damit die Lösung nicht überkonzentriert wird und vergelt.

Das Reaktionsprodukt der Komponenten (a) und (b) weist ein Gewichtsverhältnis des SiO₂ aus (a) zum SiO₂ aus (b) im Bereich von 30 : 1 bis 2 : 1 auf. Besonders bevorzugt ist ein Verhältnis von 20 : 1 bis 5 : 1. Das Verhältnis 12 : 1 bis 6 : 1 ist dabei ganz besonders bevorzugt. Die Relation SiO₂ aus (a) zur Summe der anorganischen Modifikation An_{y}O_{z} aus (c) liegt im Bereich 1000 : 1 bis 5 : 1, bevorzugt 500 : 1 bis 10 : 1.

Das mittlere Molgewicht der erfindungsgemäß hergestellten Oligomeren (gemessen durch Osmometrie in verdünnten wässerigen Lösungen) liegt vorzugsweise bei 150 bis 800 und insbesondere im Bereich von 350 bis 650. Die oligomeren Anionen der modifizierten Silikate weisen vorzugsweise eine Teilchengröße im Bereich von 20 bis 200 nm, hauptsächlich 75 bis 100 nm auf.

Die modifizierten Silikatmischungen gemäß dieser Beschreibung werden vorzugsweise als solche als Beschichtungsmaterial eingesetzt. Zur Verbesserung der Benetzung von Substraten kann es sinnvoll sein, zusätzlich geringe Mengen (<1%) Netzmittel, z.B. Alkoholethoxylate oder Tenside zuzusetzen. Als Tenside, die zusammen mit den modifizierten Silikaten zum Einsatz kommen eigenen sich anionische, kationische, amphotere oder nichtionische Tenside. Die nichtionischen Tenside sind dabei bevorzugt. Die Tensidmoleküle weisen dabei vorzugsweise weniger als 12 C-Atome pro Molekül auf. Um das Trocknungsverhalten zu beeinflussen kann es sinnvoll sein, Hydrotrope z.B. Glycerine oder Zucker zuzugeben. Desgleichen kann man die Lösungen bei Bedarf eindicken mit Konsistenzgebern, z.B. modifizierten Cellulosen (CMC, HEC), Guar oder Xanthanen.

### Anwendungen

Die wäßrigen Lösungen modifizierter Silikate gemäß der vorliegenden Erfindung sind - und dies ist ein sehr zentraler Punkt für deren spätere Anwendung - VOC frei (unter VOC versteht der Fachmann flüchtige organische Verbindungen, "volatile organic carbon"). Es hat sich nämlich herausgestellt, dass das Weglassen des kritischen Merkmals der vorliegenden Erfindung, das in der Entfernung des bei der Umsetzung der Komponenten (a) und (b) entstehenden Alkohols besteht, zu Silicatlösungen führt, die bei der Anwendung zur Beschichtung zu schlechteren Ergebnissen führt. Insbesondere eignen sich die erfindungsgemäß hergestellten Silicatlösungen, die ja frei sind von organischen Lösungsmitteln, in besonderer Weise für Beschichtungszwecke (Hydrophilisierung von Oberflächen), vorzugsweise für Hochtemperaturbeschichtungen. Beschichtungen auf Basis der erfindungsgemäß hergestellten Silicatlösungen zeichnen sich auch durch gute Chemikalien-Resistenz aus (Resistenz gegen Säuren und Alkali), ferner weisen sie eine im Vergleich zu entsprechenden Produkten mit einem Gehalt an Alkoholen (als organischen Lösungsmitteln) bessere Rißbildungsresistenz auf.

Beschichtungen von Metallen zum Korrosionsschutz oder als Zwischenschicht für weitere Beschichtungen, Behandlung von Natursteinen oder technisch hergestellter Steine oder mineralischer Formkörper, Oberflächenmodifikation von Pigmenten

### Beispiele

### Abkürzungen:

MV = molares Verhältnis SiO₂/Na₂O 3,9
FS = Feststoffanteil

Herstellung der erfindungsgemäßen Silikatlösungen:

### Beispiel 1:

81 Teile einer wäßrigen Kaliumsilikatlösung (molares Verhältnis SiO₂/K₂O 3,15; Feststoffanteil: 41 Gew.-%) wurde mit 12 Teilen Wasser vermischt und dazu anschließend bei Raumtemperatur tropfenweise 7 Teile 3-Glycidyloxypropyl-trimethoxysilan (GLYMO) zugegeben und nach Ende der Zugabe noch 15 Minuten weiter bei Raumtemperatur gerührt. Die klare Lösung wurde auf 70°C erhitzt und unter leichtem Vakuum ca. 10 Vol% Destillat (Methanol/Wasser) abgetrennt, zum Abkühlen wurden die gleiche Menge an destilliertem Wasser zur Lösung wieder zuaddiert.

### Beispiel 2:

67 Teile einer wäßrigen Kaliumsilikatlösung (molares Verhältnis SiO₂/K₂ 2,9; Feststoffanteil: 42 Gew.-%) wurde mit 27 Teilen Wasser vermischt und dazu bei Raumtemperatur tropfenweise 1 Teil 3-Aminopropyltriethoxysilan zugegeben und danach auf 40 °C erwärmt. Bei 40°C wurden 6 Teile 3-Glycidyloxypropyl-trimethoxysilan zugegeben. Die Mischung wurde weiter auf 80°C erhitzt und durch Durchleiten von Stickstoff Inertgasstrom die Lösung um 10 Vol% eingeengt. Zum Abkühlen wurde der Ansatz wieder mit 10% Wasser ergänzt.

### Beispiel 3:

Zu 96 Teilen einer wäßrigen Natriumsilikatlösung (molares Verhältnis SiO₂/Na₂O 3,9; Feststoffanteil: 28 Gew.-%) wurden bei Raumtemperatur tropfenweise 5 Teile 4,7,10-triazadezyl-triethoxisilan (TRIAMO) zugegeben. Nach Ende der Zugabe wurde noch 15 Minuten weiter bei Raumtemperatur gerührt, danach die klare Lösung bei 80°C um 10 Vol% eingeengt, danach wieder 10% Wasser zum Abkühlen zugegeben.

### Beispiel 4:

KBO₂ wurde in Wasser zu einer 40%igen Lösung verrührt. 9 Teile GLYMO (Fa. Evonik) wurden zu einer Kaliumsilikatlösung (MV 3, FS 30%) zugetropft, danach auf 80°C aufgeheizt, dann ca. 15 Volumenteile Destillat abgezogen. Zum Abkühlen wurde wieder mit 15 Teilen Wasser ergänzt und die Kaliumboratlösung eingerührt

### Beispiel 5:

In 140 Teilen einer wäßrigen Kaliumsilikatlösung (MV 4, FS 20%) wurden bei Raumtemperatur 9 Teile Trikaliumphosphat (K₃PO₄) aufgelöst. Zu dieser Vormischung wurden 8 Teile GLYMO (Fa. Evonik) zugetropft, bei 70°C ca. 20 Teile Destillat abgezogen, und wieder mit Wasser zurückergänzt.

### Beispiel 6:

Zu 158 Teilen einer 17%igen Tetramethalammonium-hydroxid-Lösung (TEAH) wurden 66 Teile 40%iges Kieselsol (Köstrosol 1040) zugetropt und auf 40°C erhitzt. Zu der erhaltenen quaternären Silikatlösung wurden 5 Teile GLYMO (Fa. Evonik) zugetropft, bei 60°C unter leichtem Vakuum 10 Gew Teile Destillat abgezogen und danach abgekühlt.

### Beispiel 7:

70 Teile Lithiumhydroxid-hydrat wurden in 700 Teilen Wasser unter Rühren aufgelöst und darin 235 g gefällte Kieselsäure (Sipernat 700, Fa. Evonik) durch hydrothermale Reaktion bei 70°C aufgelöst. Abschließend wurden 5 Teile AMEO (Fa. Evonik) in einem offenen Gefäß zugetropft, 30 Minuten weiter bei 70°C gerührt, danach ohne weitere Beheizung unter Rühren abgekühlt.

### Beispiel 8:

500 Teile Quarzsand, 2 Teile gefälltes Aluminiumoxid und 1 Teil Titandioxid in Anatasmodifikation wurden gemischt und in einem Autoklaven mit 500 Teilen konzentrierter Kalilauge (50%) und 500 Teilen Wasser bei 200°C hydrothermal zu einer anorganisch modifizierten Kaliwasserglaslösung umgesetzt, die heiße Reaktionsmischung wurde durch Zugabe von 1000 Teilen Wasser auf 80°C abgekühlt und 50 Teile Geniosil CF20 (Fa. Momentive) innerhalb 1 Stunde in einem offenen Gefäß zugetropft. Ohne weitere Beheizung wurde noch 5 Stunden unter Rühren abkühlen gelassen.

### Hinweis:

In allen Fällen der obigen Beispiele 1-8 wurde durch Headpace-Gaschromatographie der Lösungen deren VOC-Freiheit bestimmt (VOC = volatile organic carbon = Gehalt an flüchtigen organischen Verbindungen). Durch ¹H-, ¹³C-, ²⁹Si-NMR-Messungen der zuvor gefriergetrockneten Lösungen konnte die Umsetzung der Silane und Siloxane mit den anorganischen Polyanionen in Lösung zu gemischten Oligomeren nachgewiesen werden.

## Patentansprüche

1. Wäßrige Lösungen modifizierter Silikate, wobei diese Lösungen frei sind von organischen Lösungsmitteln, **dadurch** erhältlich, dass man
(a) eine wässerige Lösung von Silikaten, die der allgemeinen Formel M₂O · nSi02 folgen vorlegt, wobei M für ein Kation aus der Gruppe Li⁺, Na⁺, K⁺, NY₄⁺ wobei Y ein H-Atom und/oder einen Alkyl- oder Alkenylrest mit 1 bis 22 C-Atomen bedeutet, mit
(b) mindestens einem Silan der allgemeinen Formel (i)
R-(CH₂)ₙ-Si-(X)₃ (i)
in der X jeweils unabhängig voneinander für einen Rest CH₃, OCH₃, OC₂H₅, OC₃H₇, OCOCH₃, H oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet,
bei Temperaturen von 5 bis 100 °C zur Reaktion bringt, und anschließend die bei der Umsetzung entstandenen Alkohole entfernt.

2. Verwendung der wäßrigen Lösungen modifizierter Silikate nach Anspruch 1, für die Hydrophilisierung von Oberflächen.

3. Verwendung nach Anspruch 2 für Hochtemperaturbeschichtungen.
